# EUROPÄISCHE PATENTANMELDUNG

(11) **EP 0 811 358 A1**
(43) Veröffentlichungstag der Anmeldung: **10.12.1997**
(21) Anmeldenummer: 97810346.3
(22) Anmeldetag: 04.06.1997
(51) Int. Cl.: A61C 8/00

(54) **Demontierbares Eindrehwerkzeug zur chirurgischen Implantatinsertion**

(30) Priorität: 06.06.1996 CH 1437/96
(71) Anmelder: Institut Straumann AG, 4437 Waldenburg (CH)
(72) Erfinder: Sutter, Françis, 4439 Hölstein (CH); Solèr, Christoph, 4222 Zwingen (CH); Gunter, Daniel, 4437 Waldenburg (CH); Schug, Martin, 6006 Luzern (CH)
(74) Vertreter: Ullrich, Gerhard, Dr.

(57) **Zusammenfassung**

Das demontierbare Eindrehwerkzeug (**300**) zur chirurgischen Insertion für Implantate und Abutments, vornehmlich auf dem Dentalgebiet, besitzt ein Hülsenteil (**310**) und eine darin fixierte, drehbare Schraube (**350**), deren Bolzenteil (**351**) zuvorderst als Gewindezapfen (**352**) ausgebildet ist. Dieser Gewindezapfen (**352**) dient zum Eingriff in ein Implantat bzw. ein Abutment. Mit einem in eine Aufnahme (**340**) einsetzbaren Schieber (**370**), der die Längsachse des Eindrehwerkzeugs (**300**) schneidet, wird die Schraube (**350**) gegen Axialverschiebung arretiert. Im Schieber (**370**) befinden sich zwei unterschiedlich grosse, aber zusammenhängende Durchgangsöffnungen (**374,375**), wobei die kleinere Öffnung (**375**) bei der Verriegelung ein verdicktes Stangensegment (**356**) hintergreift und somit die Schraube (**350**) in Längsrichtung blockiert. Der wesentliche Vorteil des Werkzeugs (**300**) besteht in der einfachen Demontierbarkeit zu Reinigungszwecken.

## Beschreibung

### Anwendungsgebiet der Erfindung

Die vorliegende Erfindung betrifft ein demontierbares Eindrehwerkzeug zur Insertion von Schraubenimplantaten, insbesondere von Dentalimplantaten, und ist sowohl zum Eindrehen des Implantats in den menschlichen Knochen als auch zum Eindrehen eines Abutment in ein bereits eingebrachtes Implantat geeignet. Es versteht sich, dass mit dem Eindrehwerkzeug ein Abutment auch aus dem Implantat und erforderlichenfalls das Implantat wiederum aus dem Knochen - bei einem Dentalimplantat der Ober- oder Unterkieferknochen herausgeschraubt werden kann.

### Stand der Technik

Der konstruktive Aufbau von schraubenden Implantationswerkzeugen richtet sich zum einen prinzipiell nach der Beschaffenheit der zu handhabenden Implantate bzw. Abutments. Es ist eine Vielfalt solcherart Werkzeuge - zugehörig zum jeweiligen Implantattyp - auf dem Markt bzw. aus der Literatur bekannt. Bei einer Art von Implantaten verwendet man zur Insertion sogenannte Einbringpfosten, die auf das Implantat aufgeschraubt werden. An die Einbringpfosten wird ein maschinelles Eindrehwerkzeug bzw. ein Drehmomentschlüssel angesetzt. Nach Abschluss des Einschraubvorganges wird der Einbringpfosten entfernt und dabei das Implantat mit einem Schraubenschlüssel gegen Verdrehen gesichert (vgl. SPIEKERMANN, H.: Implantologie. Farbatlanten der Zahnmedizin, Bd. 10, Georg Thieme Verlag Stuttgart, New York, 1994, S. 32f. und S. 54f.). Manche Implantate besitzen eine sich vom Implantatkopf axial erstreckende, nichtrotationssymmetrische Eingriffskontur, in die ein Setzwerkzeug einsteckbar ist (vgl. a.a.O., S. 40f. und S. 56f.).

Das hier relevante Eindrehwerkzeug ist insbesondere für Implantate und Abutments der nachstehend beschriebenen Art vorgesehen (s. Figuren 0.1 und 0.3).

### Figuren 0.1 und 0.3

Das einzusetzende Implantat **1** ist von an sich bekanntem Aufbau. Anstelle der gezeigten Vollschraube könnte auch jedes schraubenähnliche Implantat in Betracht kommen. Das Implantat **1** besteht aus einer oberen, absteigend sich konisch verjüngenden Kopfpartie **10** und einer sich daran anschliessenden, weiter abwärts erstreckenden, zylindrischen Schaftpartie **20**. Die Kopfpartie **10** endet zuoberst in einer Implantatschulter **11**, die sich aufsteigend konisch verjüngt. Innerhalb der Implantatschulter **11** verläuft eine axiale, abwärts gerichtete, sacklochförmige Hauptbohrung **12** bis hin zum Bohrungsgrund **13**. Die Hauptbohrung **12** erweitert sich aufsteigend, so dass ein Innenkonus **14** entsteht. Koaxial zur Hauptbohrung **12** beginnt am Bohrungsgrund **13** eine sich abwärts erstreckende, ebenfalls sacklochförmige Gewindebohrung **21**, mit dem Innengewinde **22**. Die Gewindebohrung **21** ist gegenüber der am Bohrungsgrund **13** auftreffenden Hauptbohrung **12** im Durchmesser reduziert. Da es sich bei der beispielhaften Darstellung um ein Schraubenimplantat handelt, ist äusserlich an der Schaftpartie **20** ein Aussengewinde **23** vorgesehen.

Die einzusetzenden geraden, nichtmassiven Abutments **100** sind als solche ebenfalls bekannt. Sie besitzen eine obere, sich nach oben konisch verjüngende Halspartie **110** und eine untere, sich nach unten konisch verjüngende Wurzelpartie **120**. Axial durch die Halspartie **110** bis in die Wurzelpartie **120** hinein erstreckt sich eine Innengewindebohrung **130**, die zuoberst in einem Schraubensitz **131** mündet, so dass darin der Kopf einer Okklusalschraube versenkbar ist. An den Schraubensitz **131** schliesst sich ein abwärts verlaufender Innengewindeabschnitt **132** an. Von der Wurzelpartie **120** erstreckt sich ein axialer Gewindezapfen **140**, welcher in das Innengewinde **21** im Implantat **1** einschraubbar ist. Vollständig im Implantat **1** eingesetzt, liegt der Übergang von der Halspartie **110** zur Wurzelpartie **120** in Höhe der Implantatschulter **11**, so dass die Wurzelpartie **120** den Innenkonus **14** ausfüllt und die Halspartie **110** die Implantatschulter **11** überragt. Je nach Verwendung weist die Halspartie **110** eine unterschiedliche Konizität auf. Zur Rotationssicherung der auf das Abutment **100** aufgebrachten Suprakonstruktion und eventuell zum Ansetzen eines Schlüssels sind äusserlich an der Halspartie **110** mehrere Abflachungen **111** vorgesehen.

Das zum Einschrauben der zuvor beschriebenen Implantate **1** und Abutments **100** benutzte Eindrehwerkzeug **200** ist von der Gattung gemäss Figur 0.2 (vgl. auch die Abhandlung in SPIEKERMANN, a.a.O., S. 48f. und SCHROEDER/SUTTER/BUSER/ KREKELER: Orale Implantatologie. Georg Thieme Verlag Stuttgart, 2. Aufl. 1994, S. 152f. und S. 186-188).

### Figur 0.2

Das Eindrehwerkzeug **200** besteht aus einem Hülsenteil **210** und einer Schraube **250**. Das Hülsenteil **210** weist einen oberen Ratschenkörper **220** und einen Hülsenschaft **230** auf, an dessen freier Spitze ein Aussen- und ein Innenkonus **231**,**232** vorgesehen sind. Innerhalb des Hülsenteils **210** erstreckt sich axial durchgängig das drehbare, jedoch nicht axial verschiebbare Bolzenteil **251** der Schraube **250**, deren Gewindezapfen **252** aus dem Hülsenschaft **230** herausragt und deren verdickter Vielkantabschnitt **257** den Ratschenkörper **220** überragt. Oben abschliessend, über dem Vielkantabschnitt **257**, weist die Schraube **250** eine im Durchmesser erweiterte Rändelscheibe **258** zum Erfassen mit den Fingern auf. Der Gewindezapfen **252** ist zum Eingriff in das Innengewinde **22** des Implantats **1** bzw. in die Innengewindebohrung **130** des Abutment **100** vorgesehen. Hierbei fügen sich der Aussenkonus **231** mit dem Innenkonus **14** des Implantats **1** bzw. der Innenkonus **232** mit der äusseren, konischen Halspartie **110** des Abutment **100** unter Zuspannung der Schraube **250** aneinander. Die Schraube **250** besitzt am Bolzenteil **251**, im Bereich des Ratschenkörpers **220**, eine als innerer Anschlag wirkende Verdickung **259**. Mittels eines die Schraube **250** unterhalb des Vielkantabschnitts **257** umgebenden Passrings **201** ist die Schraube **250** im Hülsenteil **210** fixiert. Die Verdickung **259** ist somit zwischen dem Passring **201** und einer inneren Ausnehmung **221** im Ratschenkörper **220** eingeschlossen.

Dieses Eindrehwerkzeug **200**, das mit Sekreten und Blut des Patienten in Kontakt kommt, ist hinsichtlich der Möglichkeit für eine sterile Reinigung eingeschränkt. Feine Spalte und das Innere des Eindrehwerkzeugs **200** sind für eine intensive Reinigung schwer zugänglich.

### Aufgabe der Erfindung

Angesichts der Unvollkommenheit der bis dato existenten Eindrehwerkzeuge liegt der Erfindung die Aufgabe zugrunde, ein demontierbares Eindrehwerkzeug für den vorgenannten Zweck und der gattungsmässigen Art zu schaffen. Die Demontierbarkeit soll auf einfache und schnelle Weise realisierbar sein, ohne jedoch die Funktionsfähigkeit und Zuverlässigkeit des Werkzeugs zu beeinträchtigen. Insbesondere darf es nicht geschehen, dass sich während des Gebrauchs die Bestandteile des Werkzeugs von selbst lockern. Ziel der Demontierbarkeit ist die Zerlegbarkeit des Werkzeugs in seine einzelnen Bestandteile, so dass keine für die Reinigung unzugänglichen bzw. schwer zugänglichen Oberflächen, Spalten oder Hohlräume am Werkzeug verbleiben.

### Wesen der Erfindung

Die Wesensmerkmale des erfindungsgemässen Eindrehwerkzeugs bestehen darin, dass eine in ein Hülsenteil einsteckbare Schraube vorgesehen ist, wobei die drehbare Schraube mittels eines die Längsachse des Werkzeugs schneidenden Schiebers gegen Axialverschiebung arretiert wird. Der Schieber weist eine axiale Bohrung auf, die in eine kleinere Bohrung übergeht. Die Schraube besitzt an ihrem Bolzenteil eine radial umlaufende Nut. Im partiell eingesetzten Zustand ist die Schraube in das Hülsenteil und durch die grössere Bohrung des Schiebers ein- und ausführbar. Wird der Schieber nun so verschoben, dass die kleinere Bohrung das im Durchmesser reduzierte Bolzenteil der Schraube im Bereich der Nut umfasst, kann die Schraube nicht mehr aus dem Hülsenteil herausgezogen werden, ohne den Schieber vorher zu entriegeln. Beide Bohrungen im Schieber haben die Aussenkontur einer Acht mit verkleinertem oberem Halbkreis. Vorteilhaft ist der Schieber geschlitzt, so dass sich eine Federwirkung ergibt. Das Eindrehwerkzeug ist für verschiedene Längen zur Implantatinsertion und zum Einschrauben von Abutments sowie als Kombinationswerkzeug konzipiert. Für die Implantatinsertion ist ein zusätzliches, modifiziertes Werkzeug vorgesehen, welches mit einem Adapter von einem zahnärztlichen Handstück antreibbar ist.

Dank der Erfindung steht nun ein Eindrehwerkzeug für Implantate und Abutments zur Verfügung, welches sich zum Zweck der Reinigung mit wenigen Handgriffen vollständing demontieren lässt, variabel in der Längengestaltung ist und manuell sowie teilweise motorisch angetrieben, angewendet werden kann. Das Eindrehwerkzeug zeichnet sich aufgrund der funktionsbezogenen Einzelvarianten mit der Folge einer reduzierten Beanspruchung der Einzelteile durch eine erhöhte Lebensdauer und Zuverlässigkeit aus. Ferner ist es nun möglich, ein nicht mehr voll funktionstüchtiges Einzelteil auszuwechseln und dabei die übrigen Teile des Eindrehwerkzeugs weiterhin zu benutzen.

### Zeichnungen und Ausführungsbeispiel

Anhand der beiliegenden Zeichnungen erfolgt nachstehend die detaillierte Beschreibung von Ausführungsbeispielen zum erfindungsgemässen Eindrehwerkzeug. Es zeigen:
- Figur 0.1:: ein Implantat herkömmlicher Art mit angenähertem konischem Abutment;
- Figur 0.2:: ein Eindrehwerkzeug nach dem Stand der Technik;
- Figur 0.3:: verschiedene konische Abutments an sich bekannter Art;

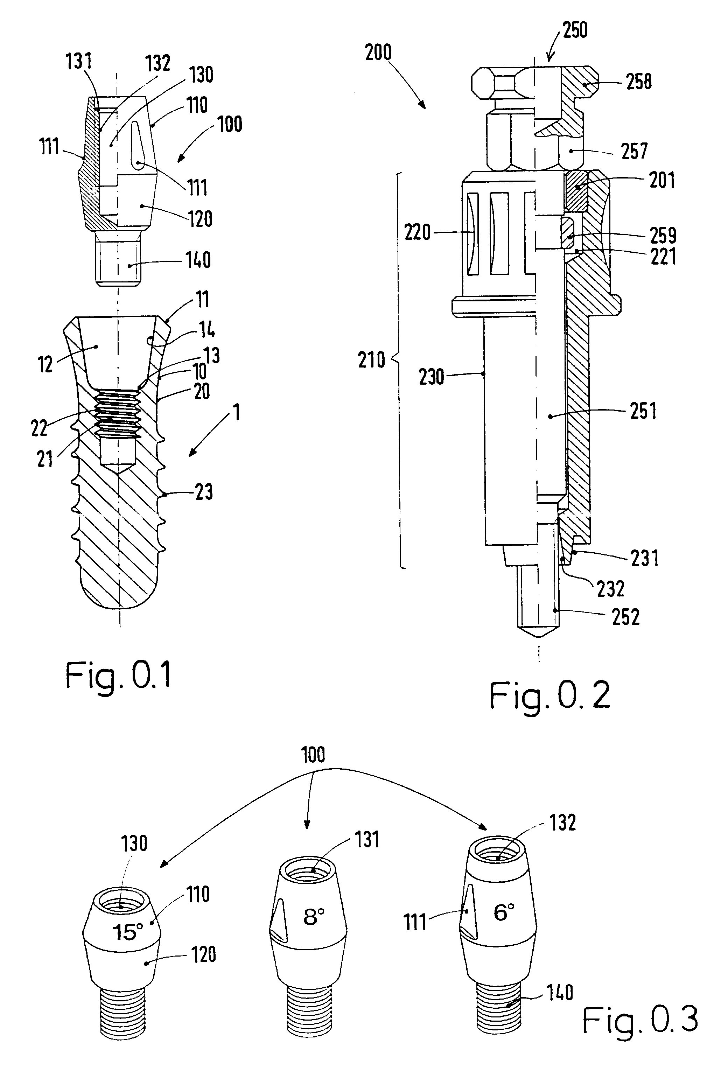

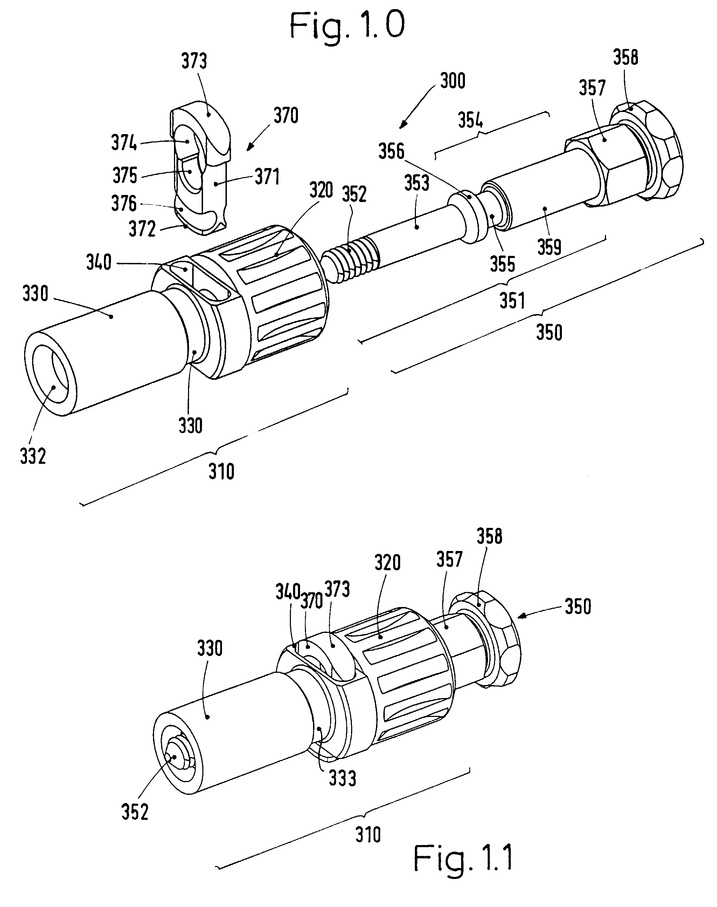

- Figur 1.0:: eine Explosivdarstellung des Eindrehwerkzeugs mit Hülsenteil, Schraube und Schieber zum Eindrehen von Abutments;
- Figur 1.1:: das Werkzeug gemäss Figur 1.0 in zusammengesetztem Zustand;

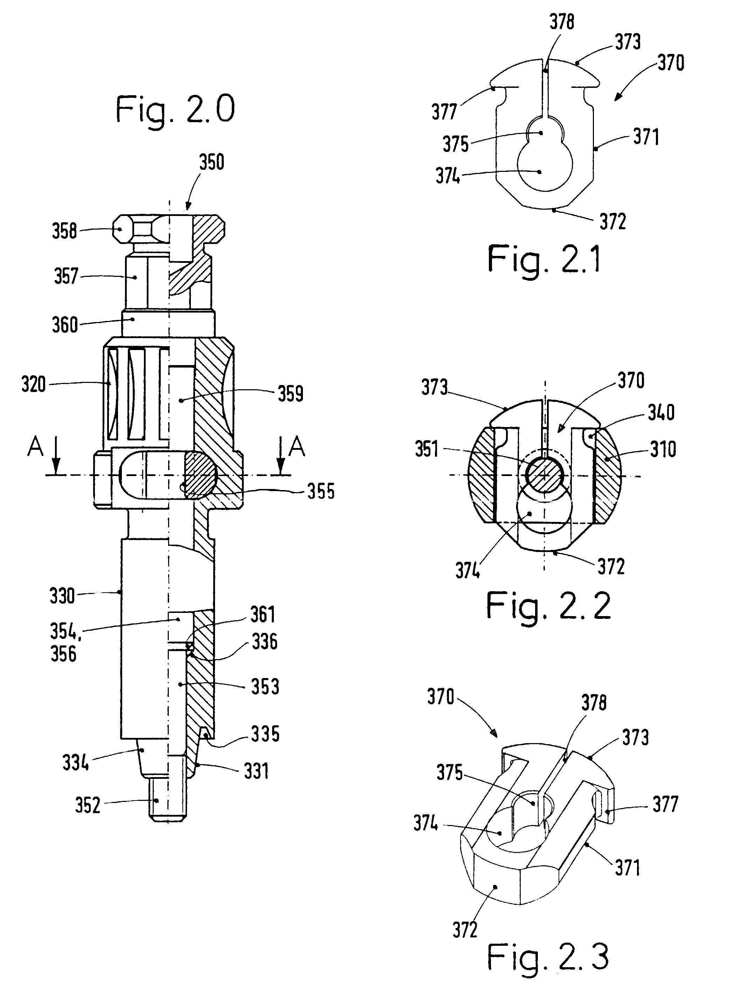

- Figur 2.0:: ein Eindrehwerkzeug in zusammengesetztem Zustand für Implantate;
- Figur 2.1:: eine zweite Konstruktion des Schiebers in der Frontansicht;
- Figur 2.2:: den Schnitt aus Figur 2.0 auf der Linie A-A;
- Figur 2.3:: den Schieber gemäss den Figuren 2.0 bis 2.2 in der Perspektive;

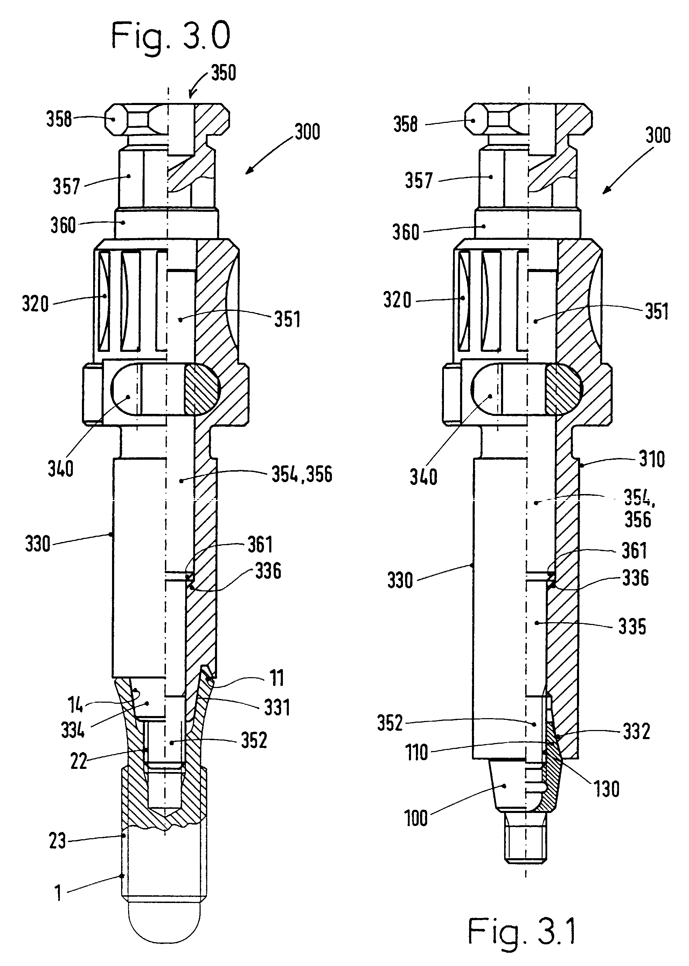

- Figur 3.0:: das Werkzeug gemäss Figur 2.0 mit einem aufgeschraubten Implantat;
- Figur 3.1:: ein Eindrehwerkzeug mit einem aufgeschraubten Abutment;

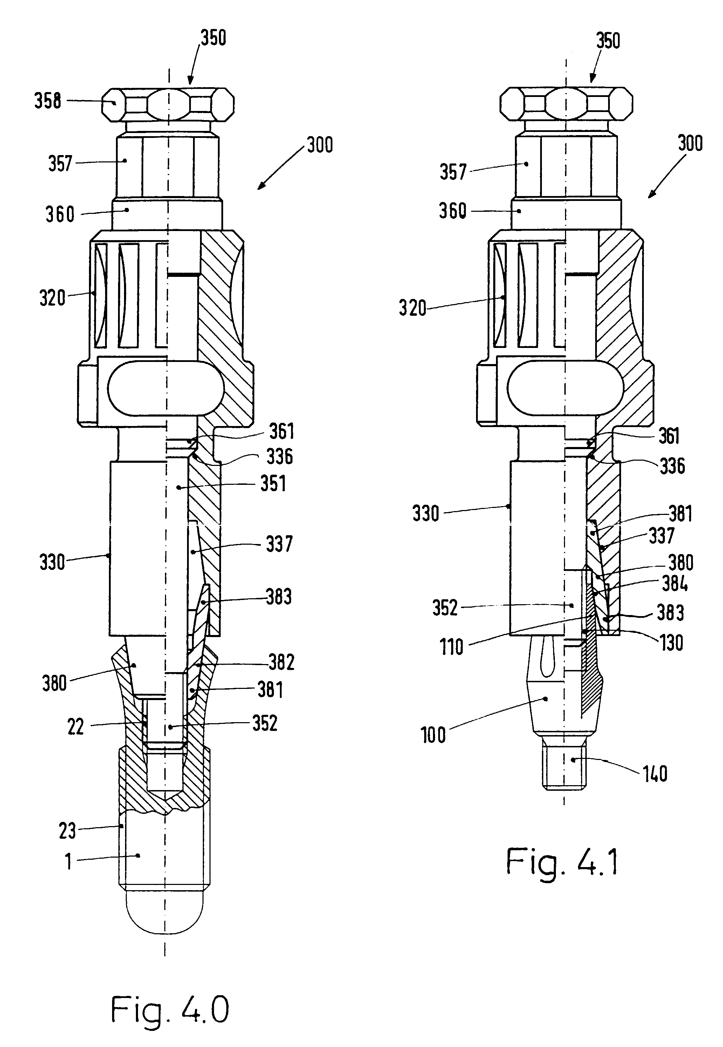

- Figur 4.0:: ein kombiniertes Eindrehwerkzeug für Implantate und Abutments, hier im Zustand für Implantate mit einem aufgeschraubten Implantat;
- Figur 4.1:: das kombinierte Eindrehwerkzeug gemäss Figur 4.0, hier im Zustand für Abutments mit einem aufgeschraubten Abutment;

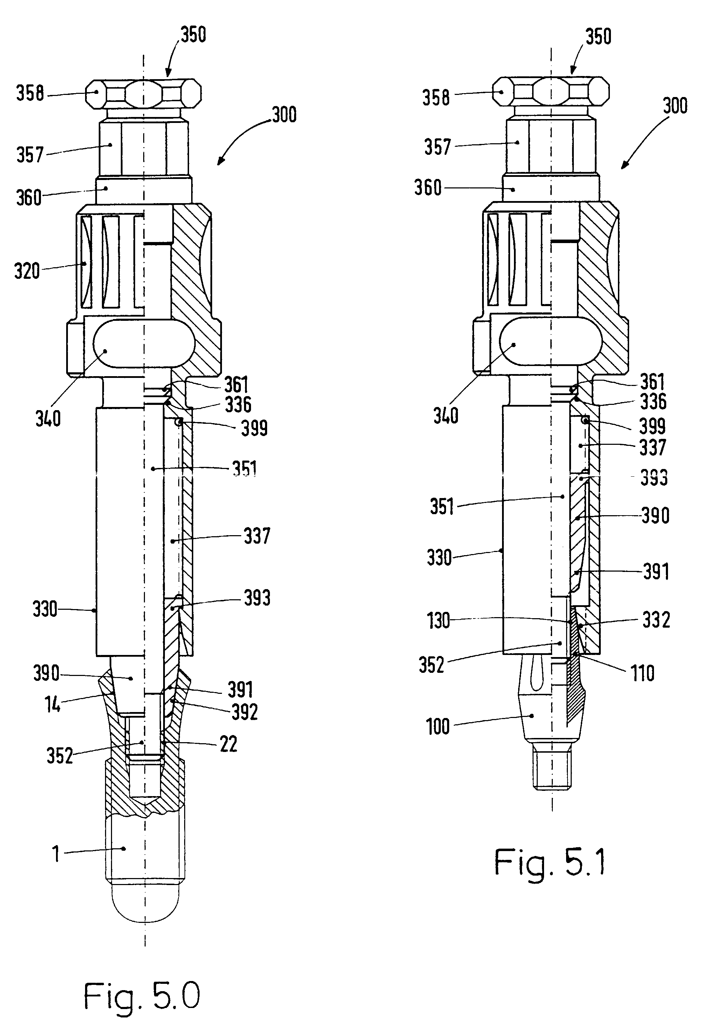

- Figur 5.0:: die zweite Variante eines kombinierten Eindrehwerkzeugs für Implantate und Abutments, hier im Zustand für Implantate mit einem aufgeschraubten Implantat;
- Figur 5.1:: das kombinierte Eindrehwerkzeug gemäss Figur 5.0, hier im Zustand für Abutments mit einem aufgeschraubten Abutment;
- Figur 6.0:: die Codiersicherung, hier das Eindrehwerkzeug für Abutments mit korrekter Schraubenlänge;
- Figur 6.1:: die Codiersicherung, hier das Eindrehwerkzeug für Abutments mit zu langer Schraube;
- Figur 6.2:: die Codiersicherung, hier das Eindrehwerkzeug für Implantate mit korrekter Schraubenlänge;
- Figur 6.3:: die Codiersicherung, hier das Eindrehwerkzeug für Implantate mit zu kurzer Schraube;

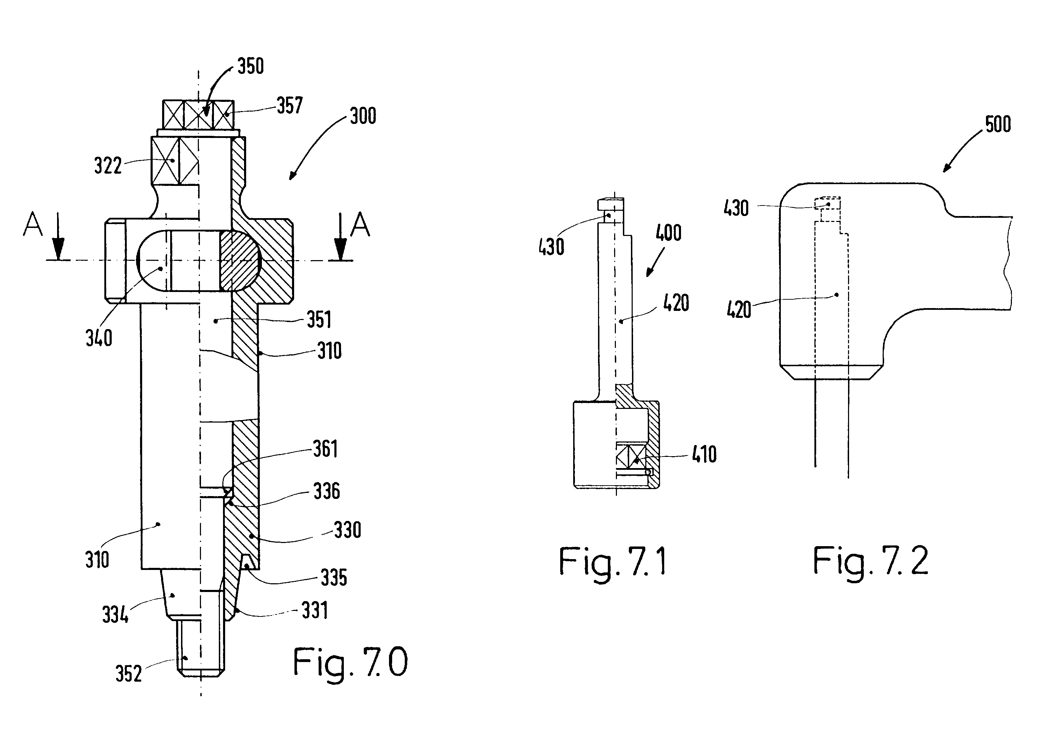

- Figur 7.0:: ein maschinelles Eindrehwerkzeug für die Kombination mit einem Adapter zur Betätigung mit einem zahnärztlichen Handstück;
- Figur 7.1:: einen Adapter;
- Figur 7.2:: das Kopfteil eines zahnärztlichen Handstücks mit eingestecktem Adapterschaft zur Aufnahme des maschinellen Eindrehwerkzeugs;
- Figuren 8.0 bis 8.5:: die etappenweise Vorbereitungsphase der Implantatinsertion mit dem Eindrehwerkzeug;

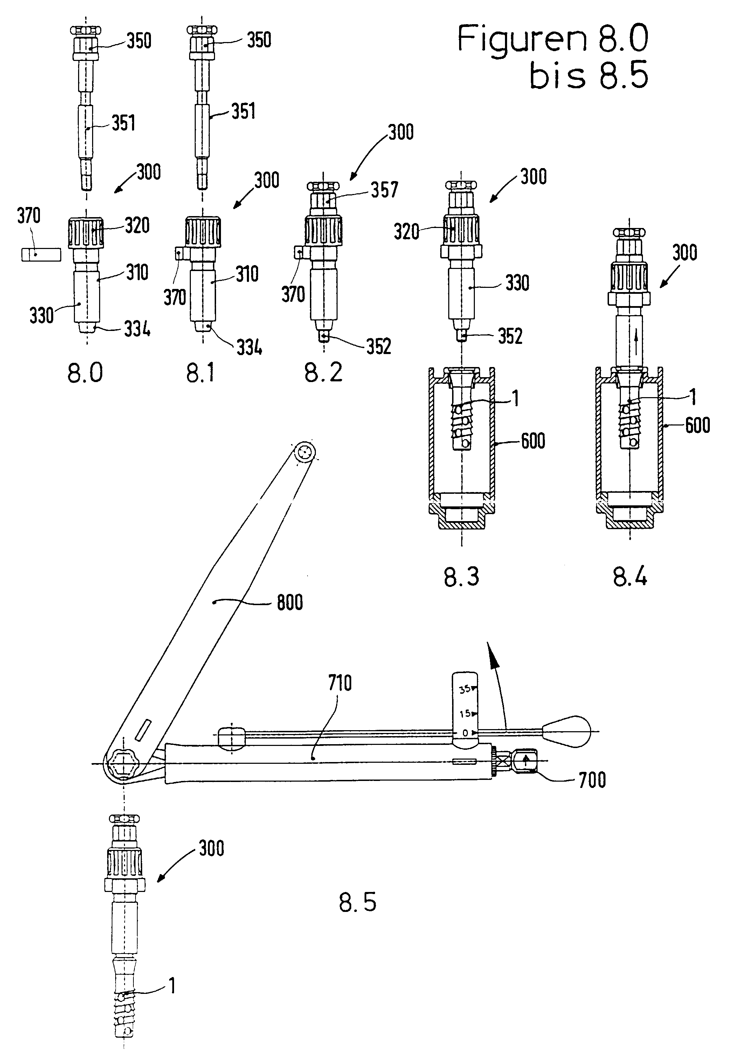

- Figur 8.0:: das Eindrehwerkzeug mit herausgezogener Schraube und herausgezogenem Schieber;
- Figur 8.1:: das Eindrehwerkzeug mit herausgezogener Schraube und partiell eingesetztem Schieber;
- Figur 8.2:: das Eindrehwerkzeug mit eingesetzter Schraube und partiell eingesetztem Schieber;
- Figur 8.3:: das Eindrehwerkzeug mit eingesetzter Schraube und verriegeltem Schieber und angenäherter Sterilampulle mit einem Implantat;
- Figur 8.4:: das Eindrehwerkzeug ist auf das Implantat aufgeschraubt und
- Figur 8.5:: Ratsche mit Drehmomentschlüssel sowie Führungsschlüssel werden an das Eindrehwerkzeug mit dem entnommenen Implantat angesetzt.

### Figuren 1.0 und 1.1

Das hier gezeigte und für das Eindrehen bzw. Entfernen von Abutments vorgesehene Eindrehwerkzeug **300** besteht aus einem Hülsenteil **310**, einer Schraube **350** und einem Schieber **370**. Das Hülsenteil **310** besitzt zuoberst einen an sich bekannten Ratschenkopf **320** und zuunterst einen Hülsenschaft **330**, wobei zwischen den beiden letztgenannten eine Aufnahme **340** zum Einsetzen des Schiebers **370** vorhanden ist. Die freie Spitze des Hülsenschafts **330** weist einen Innenkonus **332** auf, der zur konischen Aussenkontur der Halspartie **110** der aufzunehmenden Abutments **100** komplementär ist. Unterhalb der Aufnahme **340** ist im Hülsenschaft **330** eine umlaufende Nut **333** vorgesehen, die der Befestigung eines Fadens als Aspirationssicherung dient.

Die einteilige Schraube **350** besitzt ein Bolzenteil **351** mit mehreren Bereichen, das in einen im Durchmesser erweiterten Vielkantabschnitt **357** übergeht, an den sich eine nochmals vergrösserte Rändelscheibe **358** anschliesst, die zum Erfassen der Schraube **350** mit den Fingern dient. Das Bolzenteil **351** weist am freien Ende einen Gewindezapfen **352** auf. An letzteren schliesst sich ein glatter Abschnitt **353** an, der in einen im Durchmesser verdickten Stangenabschnitt **354** übergeht. Hinter dem Übergang vom Abschnitt **353** zum Stangenabschnitt **354** befindet sich eine radial umlaufende Nut **355**, wodurch der verdickte Stangenabschnitt **354** quasi in einen vorderes - hier kragenförmiges **356** - und ein hinteres Stangensegment **359** geteilt wird.

Der im Prinzip quaderförmige Schieber **370** weist parallele, glatte Seitenflanken **371** auf und ist an der Boden- sowie Deckfläche **372**,**373** abgerundet, um im eingesetzten Zustand nicht störend über die Aufnahme **340** hinauszuragen. Der Schieber **370** kann allerdings nur mit der Bodenfläche **372** voran von beiden Seiten in die Aufnahme **340** eingeführt werden. Der Schieber **370** besitzt zwei ineinander übergehende Durchgangsöffnungen **374**,**375**. Nahe der Deckfläche **373** ist die grössere, kreisrunde Durchgangsöffnung **374** angeordnet. Unmittelbar an die Durchgangsöffnung **374** setzt die kleinere, ebenfalls kreisrunde Durchgangsöffnung **375** an. Die Durchgangsöffnung **375** liegt quasi im Zentrum des Schiebers **370**, während die grössere Durchgangsöffnung **374** exzentrisch angeordnet ist. Beide Durchgangsöffnungen **374**,**375** ergeben zusammen die Aussengeometrie einer Acht mit einem engeren Kreisbogen. Die nahe der Bodenfläche **372** eingearbeitete Rille **376** dient der besseren Griffigkeit des Schiebers **370**, z.B. zum Eingreifen mit dem Fingernagel.

Die Montage des Eindrehwerkzeugs **300** geschieht auf folgende Weise. Der Schieber **370** wird mit der Bodenfläche **372** voran bis zum Anschlag in die Aufnahme **340** eingeführt. In dieser Position ist die grössere Durchgangsöffnung **374** zentrisch im Eindrehwerkzeug **300** positioniert, und das Bolzenteil **351** der Schraube **350** kann bis zum Anschlag eingesteckt werden. Hierbei gleitet das kragenförmige Stangensegment **356** durch die Durchgangsöffnung **374**, und die Nut **355** ist mit dem Schieber **370** deckungsgleich. Nun wird der Schieber **370** entgegen der Einsteckrichtung um den maximal möglichen Weg zurückgeschoben. Hierdurch umfasst die kleinere Durchgangsöffnung **375** das Bolzenteil **351** im Bereich der Nut **355** und die dickeren Stangensegmente **356**,**359** liegen beiderseits des Schiebers **370**. Ohne Entriegelung des Schiebers **370** in umgekehrter Abfolge ist die drehbare Schraube **350** im Hülsenteil gegen Axialverschiebung gesichert. Im zusammengesetzten Zustand steckt die Schraube **350** soweit im Hülsenteil **310**, dass oben der Vielkantabschnitt **357** auf dem Ratschenkörper **320** aufsitzt und unten der Gewindezapfen **352** etwa mit dem Hülsenschaft **330** abschliesst.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 2.0 bis 3.0

Im Verhältnis zum vorangehenden Figurenpaar weist dieses Eindrehwerkzeug **300** folgende Unterschiede auf:
- Es handelt sich um ein Eindrehwerkzeug **300** zur Insertion von Implantaten **1**.
- Der verdickte Stangenabschnitt **354** beginnt bereits kurz hinter dem Gewindezapfen **352**, so dass der glatte Abschnitt **353** verkürzt ist und die Nut **355** die Stangensegmente **356**, **359** anders proportioniert teilt. Das zuvor nur kragenförmige Stangensegment **356** ist nun sogar breiter als das hintere Stangensegment **359**.
- Der Schieber **370** besitzt eine etwas andere Gestaltung.

Der Hülsenschaft **330** hat eine sich nach vorn verjüngende Spitze **334** mit einem Aussenkonus **331** und einer radial umlaufenden Hohlkehle **335**, welche zum Innenkonus **14** und zur Schulter **11** des Implantats 1 komplementär sind. Der Gewindezapfen **352** ragt aus der Spitze **334** heraus, um in die Innengewindebohrung **21** im Implantat **1** eingreifen zu können. Unterhalb des Vielkantabschnittes **357** ist ein Bund **360** vorgesehen, der auf dem Ratschenkörper **320** aufsitzt. Neben diesem Anschlag zur Begrenzung der Einsetztiefe der Schraube **350** befindet sich innerhalb des Hülsenschafts **330** eine Verengung **336**, welche komplementär zum Übergang zwischen dem Abschnitt **353** und dem dickeren Stangensegment **356** ist. Zwischen dieser Verengung **336** und der konischen Ringschulter **361** des Stangensegments **356** muss ein funktionsbedingtes Spiel bestehen.

Der Schieber **370**, welcher auch hier von beiden Seiten in die Aufnahme **340** einführbar ist, besitzt wiederum die glatten Seitenflanken **371**, die Boden- und die Deckfläche **372**, **373** sowie die beiden Durchgangsöffnungen **374**,**375**. In der Positionierung der Durchgangsöffnungen **374**,**375** hat allerdings ein Wechsel stattgefunden. Die grössere Durchgangsöffnung **374** ist nun nahe der Bodenfläche **372** angeordnet, während die kleinere Durchgangsöffnung **375** ebenfalls zentrisch im Schieber **370** sitzt. Ansonsten ist die Gestalt beider ineinander übergehender Durchgangsöffnungen **374**,**375** unverändert. Die Deckfläche **373** des Schiebers **370** überragt die Seitenflanken **371**, so dass beiderseits Aufsetzkanten **377** entstehen, die ein Durchgleiten des Schiebers **370** durch die Aufnahme **340** verhindern. Zur Erzeugung einer Federwirkung besitzt der Schieber **370** einen von der zentrischen Durchgangsöffnung **375** sich zur Deckfläche **373** erstreckenden, durchgängigen Schlitz **378**.

Entsprechend der Abänderung des Schiebers **370** hat sich auch der Montageablauf des Eindrehwerkzeugs **300** verändert. Zum Einführen des Bolzenteils **351** der Schraube **350** wird der Schieber **370** jetzt nur partiell in die Aufnahme **340** gesteckt, so dass die grössere Durchgangsöffnung **374** mit dem Bolzenteil **351** fluchtet und dieses hindurchgeschoben werden kann. Ist das Bolzenteil **351** vollständig in das Hülsenteil **310** eingeschoben, befindet sich wiederum die Nut **355** im Bereich des Schiebers **370**. Nun wird der Schieber **370** vollständig in die Aufnahme **340** eingedrückt, wodurch die kleinere Durchgangsöffnung **375** das Bolzenteil **351** im Bereich der Nut **355** umfasst. Das Bolzenteil **351** rastet quasi in die Durchgangsöffnung **375** ein, da der Zugang zur Durchgangsöffnung **375** an sich enger ist als der Durchmesser des Bolzenteils **351**. Beim Einrasten findet eine gewisse Spreizung des Schiebers **370** statt, welche durch den Schlitz **378** ermöglicht wird. Die Demontage des Eindrehwerkzeugs **300** geschieht analog in umgekehrter Folge.

### Figur 3.1

Dieses Eindrehwerkzeug **300** ist zum Einschrauben von Abutments **100** vorgesehen. Der Gewindezapfen **352** des Bolzenteils **351** der Schraube **350** überragt den Hülsenschaft **330** nur minimal und greift in die Innengewindebohrung **130** im Abutment **100** ein. Die konische Halspartie **110** ragt in den Hülsenschaft **330** hinein und fügt sich an dessen Innenkonus **332** an. Die konische Spitze **334** - diese wird zur Aufname von Implantaten **1** benötigt - entfällt hier. Das gegenüber dem Eindrehwerkzeug **300** für Implantate **1** verminderte Herausragen des Gewindezapfens **352** erreicht man, indem ein längeres Hülsenteil **310** oder aber eine kürzere Schraube **350** zum Einsatz kommt.

### Figuren 4.0 und 4.1

Die Besonderheit bei diesem Eindrehwerkzeug **300** besteht darin, dass es sowohl zum Einschrauben von Implantaten **1** als auch von Abutments **100** geeignet ist. Dies hat man durch einen umkehrbaren Hülseneinsatz **380** erreicht. Am freien Ende des Hülsenschafts **330** ist innerlich eine Hülsenaufnahme **337** vorgesehen, in welche der Hülseneinsatz **380** in zwei Positionen einsteckbar ist.

Weist die Hülsenspitze **381** nach aussen, so ist das Eindrehwerkzeug **300** zur Aufnahme von Implantaten **1** bereit. Die Hülsenbasis **383** steckt drehfest in der Hülsenaufnahme **337**. Die Hülsenspitze **381** besitzt einen Aussenkonus **382**, welcher zum Innenkonus **14** des Implantats **1** komplementär ist. Durch die Hülsenspitze **381** ragt der Gewindezapfen **352** des Bolzenteils **351**. Der Gewindezapfen **352** greift in das Innengewinde **22** im Implantat **1** ein.

Weist die Hülsenspitze **381** nach innen, so ist das Eindrehwerkzeug **300** zur Aufnahme von Abutments **100** eingerichtet. Die Hülsenspitze **381** steckt drehfest in der Hülsenaufnahme **337**, die Hülsenbasis **383** weist nach aussen und der Innenkonus **384** des Hülseneinsatzes **380** dient der Aufnahme der konischen Halspartie **110** des Abutment **100**, wobei der Gewindezapfen **352** in die Innengewindebohrung **130** im Abutment **100** eingreift. Die übrige Gestaltung ist unverändert. Lediglich die Verengung **336** im Hülsenschaft **330** und die Ringschulter **361** am Bolzenteil **351** müssen höher in Richtung der Aufnahme **340** verlegt werden.

### Figuren 5.0 und 5.1

Eine weitere Variante eines für Implantate **1** und für Abutments **100** geeigneten Eindrehwerkzeugs **300** sieht eine im Hülsenschaft **330** in einer Hülsenaufnahme **337** drehgesichert fixierte und unter Spannung einer Feder **399** stehende Schiebehülse **390** vor. Die Schiebehülse **390** ist auf dem Bolzenteil **351** axial verschiebbar und wird von der Feder **399** nach aussen gedrückt, so dass die Spitze **391** der Schiebehülse **390** aus dem Hülsenschaft **330** herausfährt. Die Hülsenbasis **393** hat einen Anschlag, wodurch die Ausfahrlänge begrenzt ist. Die Spitze **391** besitzt wiederum einen Aussenkonus **392**, der zum Innenkonus **14** des Implantats **1** komplementär ist. Durch die Spitze **391** ragt der Gewindezapfen **352** des Bolzenteils **351**. Der Gewindezapfen **352** greift in das Innengewinde **22** im Implantat **1** ein.

Soll das Eindrehwerkzeug **300** für Abutments **100** eingesetzt werden, wird die Schiebehülse **390** zuvor in den Hülsenschaft **330** zurückgeschoben, wo sie in einer Endstellung einrastet. Denkbar ist auch, dass die Schiebehülse **390** von dem aufzunehmenden Abutment **100** zurückgedrängt wird. Innerlich des Hülsenschafts **330** ist an dessen freiem Ende ein Innenkonus **332** vorgesehen, der wiederum zur Aufnahme der konischen Halspartie **110** des Abutment **100** dient. Der Gewindezapfen **352** des Bolzenteils **351** der Schraube **350** überragt den Hülsenschaft **330** und greift in die Innengewindebohrung **130** im Abutment **100** ein. Die übrige Gestaltung ist unverändert.

### Figuren 6.0 bis 6.3

Je nach Einsatzort im Gebiss des Patienten und der dort gegebenen Zahnsituation stehen verschieden lange Eindrehwerkzeuge **300** zur Verfügung, d.h. es werden unterschiedliche Längen bei den Hülsenteilen **310** und den Schrauben **350** vorgesehen. Um die Montage eines Hülsenteils **310** und der zugehörigen Schraube **350** zu erleichtern und sicherzustellen, ist eine Codiersicherung vorhanden. Diese Codiersicherung besteht einerseits am Hülsenteil **310** aus einer Einsenkung **321** auf der Oberseite des Ratschenkörpers **320** und der Positionierung der Verengung **336** und andererseits an der Schraube **350** aus der Abmessung des hinteren Stangensegments **359** bzw. einem Schlussabsatz **362** vor dem Bund **360** und der Position der Ringschulter **361** am Bolzenteil **351**.

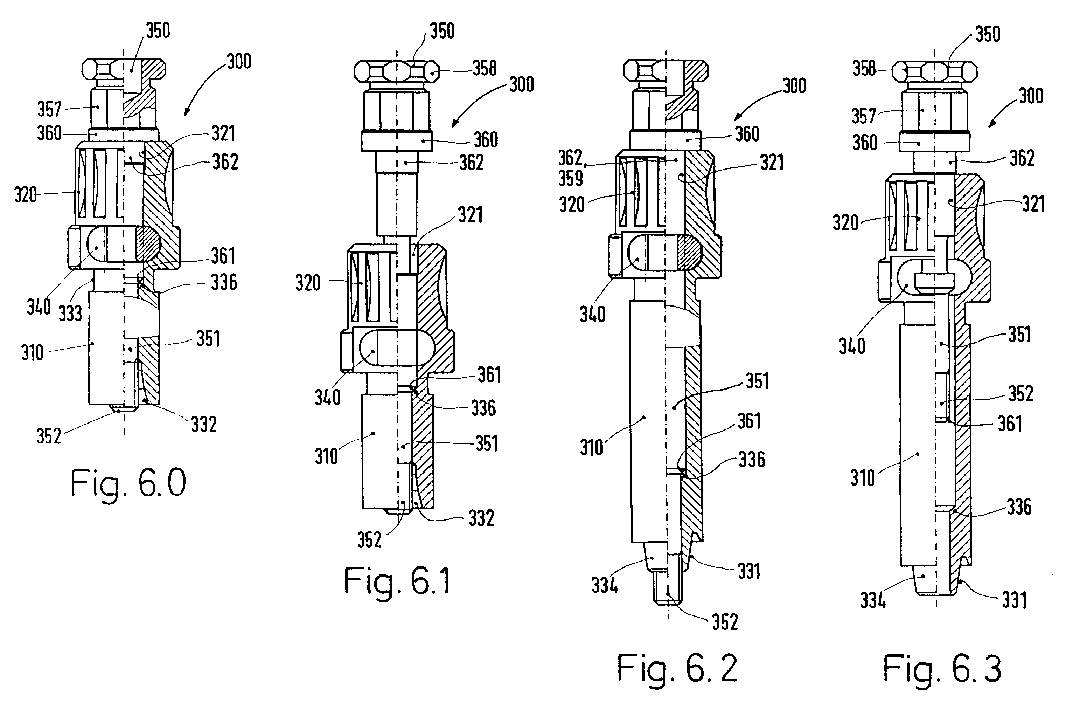

Zu den jeweiligen Hülsenteilen **310** passende Schrauben **350** lassen sich ordnungsgemäss einsetzen, so dass sich das Stangensegment **359** bzw. der Schlussabsatz **362** in die Einsenkung **321** einfügt und der Bund **360** auf dem Ratschenkörper **320** aufsitzt. Nur bei dieser Konstellation lässt sich der Schieber **370** zur Fixierung der Schraube **350** betätigen. Figur 6.0 zeigt ein Eindrehwerkzeug **300** für Abutments **100** mit passender Schraube **350**, während Figur 6.2 ein Eindrehwerkzeug **300** für Implantate **1** mit zugehöriger Schraube **350** veranschaulicht.

In Figur 6.1 ist ein Eindrehwerkzeug **300** für Abutments **100** ersichtlich; die verwendete Schraube **350** ist jedoch zu lang. Die Ringschulter **361** stösst auf die Verengung **336**, wodurch die Schraube **350** nicht gänzlich in das Hülsenteil **310** einführbar ist. In Figur 6.3 erkennt man ein Eindrehwerkzeug **300** für Implantate **1**, jedoch ist die verwendete Schraube **350** zu kurz. Dies wird dadurch angezeigt, dass diese Schraube **350** einen Schlussabsatz **362** aufweist, der im Durchmesser grösser als die Einsenkung **321** ist, wodurch sich diese falsche Schraube **350** nicht vollständig in das Hülsenteil **310** einführen lässt.

### Figuren 7.0 bis 7.2

Im Verhältnis zu den bisherigen Figuren weist dieses Eindrehwerkzeug **300** für den maschinellen Antrieb folgende Unterschiede auf:
- Vorrangig ist das maschinell betätigte Eindrehwerkzeug **300** nur zur Insertion von Implantaten **1** konzipiert.
- Anstelle des Ratschenkörpers **320** ist ein Aussenvielkant **322** über der Aufnahme **340** am Hülsenteil **310** vorgesehen.
- Die Rändelscheibe **358** an der Schraube **350** entfällt und der Vielkantabschnitt **357** ist zum Ansatz eines Adapters **400** ausgebildet.

Der Adapter **400** besitzt eine zum Vielkantabschnitt **357** komplementäre Steckaufnahme **410**, in welche der Vielkantabschnitt **357** einsetzbar ist. Von der Steckaufnahme **410** erstreckt sich eine Übertragungswelle **420** mit einer standardisierten Steckkupplung **430** zum Einführen in ein herkömmliches zahnärztliches Handstück **500**. Im betriebsbereiten Zustand ist der Adapter **400** einerseits auf das Eindrehwerkzeug **300** aufgesteckt und andererseits ist das Handstück **500** eingeschoben. Der übrige Aufbau des Eindrehwerkzeugs **300** ist unverändert.

### Figuren 8.0 bis 8.5

Diese Figurenfolge veranschaulicht zusammenfassend die Handhabung des Eindrehwerkzeugs **300** am Beispiel einer geplanten Insertion eines Implantats **1**, welches aus einer Sterilampulle zu entnehmen ist.
- Figur 8.0:: Das Eindrehwerkzeug **300** ist noch unmontiert. Die Bestandteile Hülsenteil **310**, Schraube **350** und Schieber **370** liegen einzeln vor.
- Figur 8.1:: Im ersten Montageschritt wird der Schieber **370** partiell in die Aufnahme **340** eingeführt, so dass die grössere Durchgangsöffnung **374** in zentrische Position kommt und mit dem Bolzenteil **351** der Schraube **350** fluchtet.
- Figur 8.2:: Im zweiten Montageschritt setzt man die passende Schraube **350** ganz in das Hülsenteil **310** ein. Die Nut **355** am Bolzenteil **351** befindet sich im Bereich des Schiebers.
- Figur 8.3:: Im dritten Montageschritt wird der Schieber **370** ganz eingedrückt. Die kleine Durchgangsöffnung **375** umfasst das Bolzenteil **351** im Bereich der Nut **355** und die Schraube **350** ist nun axial arretiert.
- Figur 8.4:: Jetzt wird das Eindrehwerkzeug **300** auf das Implantat **1** aufgesetzt, welches sich in einer Sterilampulle **600** befindet. Durch Drehen der Rändelscheibe **358** mit den Fingern wird der Gewindezapfen **352** in das Innengewinde **22** im Implantat **1** eingeschraubt.
- Figur 8.5:: Schliesslich setzt man die Ratsche **700** - diese kann mit einer Drehmomentmessvorrichtung **710** komplettiert sein - an den Ratschenkörper **320** des Eindrehwerkzeugs **300** an. Zugleich wird der Führungsschlüssel **800** auf den Vielkantabschnitt **357** gesteckt. Nun wird die Verschraubung zwischen dem Eindrehwerkzeug **300** und dem Implantat **1** gekontert. Es empfiehlt sich, diese Arbeit auszuführen, während das Implantat **1** noch in der Sterilampulle **600** sitzt. So vorbereitet, kann das Implantat **1** aus der Sterilampulle **600** entnommen werden und die eigentliche Insertion erfolgen.

Zum vorbeschriebenen Eindrehwerkzeug 300 sind weitere konstruktive Variationen realisierbar. Hier ausdrücklich erwähnt sei noch:
- Auf das verdickte hintere Stangensegment **359** könnte verzichtet werden; massgeblich ist das Vorhandensein des vorderen, dickeren Stangensegments **356**, wodurch nach Betätigen des Schiebers **370** ein Rückziehen der Schraube **350** unmöglich wird. Die Begrenzung der Einstecktiefe der Schraube **350** in das Hülsenteil ist bereits durch den Vielkantabschnitt **357**, den Bund oder den Schlussabsatz **362** sowie durch die Ringschulter **361** in Verbindung mit der Verengung **336** gegeben.

## Patentansprüche

1. Demontierbares Eindrehwerkzeug (**300**) zur chirurgischen Insertion für Implantate (**1**) und Abutments (**100**), vornehmlich auf dem Dentalgebiet, mit einem Hülsenteil (**310**) und einer darin fixierten, drehbaren Schraube (**350**) deren Bolzenteil (**351**) zuvorderst ein Verbindungsmittel (**352**) - vorzugsweise als Gewindezapfen ausgebildet - zum Eingriff in ein zu schraubendes Implantat (**1**) bzw. Abutment (**100**) aufweist, dadurch gekennzeichnet, dass die Schraube (**350**) mittels eines in das Hülsenteil (**310**) einsetzbaren Schiebers (**370**), welcher die Längsachse des Eindrehwerkzeugs (**300**) schneidet, gegen Axialverschiebung arretierbar ist.

2. Demontierbares Eindrehwerkzeug nach Anspruch 1, **dadurch gekennzeichnet**, dass am Bolzenteil (**351**) ein gegenüber dem Kerndurchmesser verdicktes Stangensegment (**356**) vorgesehen ist, hinter welches der in eine Aufnahme (**340**) gesteckte Schieber (**370**) in seiner Endposition greift.

3. Demontierbares Eindrehwerkzeug nach Anspruch 1 oder 2, **dadurch gekennzeichnet**, dass
a) am Bolzenteil (**351**) ein gegenüber dem Kerndurchmesser verdickter Stangenabschnitt (**354**) vorhanden ist, der eine radial umlaufende Nut (**355**) aufweist, wodurch der Stangenabschnitt (**354**) in zwei dickere Stangensegmente (**356**,**359**) mit der dazwischenliegenden Nut (**355**) geteilt wird und
b) im Schieber (**370**) zwei ineinander übergehende, unterschiedlich grosse Durchgangsöffnungen (**374**,**375**) vorgesehen sind, wobei
c) das Stangensegment (**356**) nur durch die grössere Durchgangsöffnung (**374**), nicht aber durch die kleinere Durchgangsöffnung (**375**) steckbar ist und
d) die kleinere Durchgangsöffnung (**375**) jedoch das Bolzenteil (**351**) im Kerndurchmesser bzw. im Bereich der Nut (**355**) umfassen kann.

4. Demontierbares Eindrehwerkzeug nach Anspruch 3, **dadurch gekennzeichnet**, dass die Durchgangsöffnungen (**374**, **375**) die Aussenkontur der Ziffer Acht mit einem engeren Kreisbogen ergeben und die kleinere Durchgangsöffnung (**374**) mehr zum Zentrum des Schiebers (**370**) hin orientiert ist als die grossere Durcngangsöftnung (**374**).

5. Demontierbares Eindrehwerkzeug nach Anspruch 1, **dadurch gekennzeichnet**, dass
a) das Hülsenteil (**310**) einen Hülsenschaft (**330**) aufweist, an den sich die Aufnahme (**340**) für den Schieber (**370**) anschliesst und
b) oberhalb der Aufnahme (**340**) ein Ratschenkörper (**320**) zum Ansetzen einer Ratsche (**700**) oder eine nichtrotationssymmetrische Kontur - vorzugsweise ein Aussenvielkant (**322**) - zum Ansetzen eines Schlüssels bzw. zum direkten oder indirekten Ansetzen einer motorischen Antriebsvorrichtung (**500**) angeordnet ist.

6. Demontierbares Eindrehwerkzeug nach Anspruch 5, **dadurch gekennzeichnet**, dass
a) zum Ansetzen an den Aussenvielkant (**322**) ein Adapter (**400**) mit seiner Steckaufnahme (**410**) vorgesehen ist, wobei
b) der Adapter (**400**) eine an die Steckaufnahme (**410**) ansetzende Übertragungswelle (**420**) aufweist, die am freien Ende eine standardisierte Steckkupplung (**430**) aufweist, welche in ein als motorische Antriebsvorrichtung vorhandenes zahnärztliches Handstück (**500**) einsetzbar ist.

7. Demontierbares Eindrehwerkzeug nach Anspruch 5, **dadurch gekennzeichnet**, dass am Hülsenschaft (**330**) ein Innenkonus (**332**) - zur Aufname der äusserlich konischen Halspartie (**110**) eines Abutment (**100**) - oder ein Aussenkonus (**331**) - zur Aufname des Innenkonus (**14**) eines Implantats (**1**) - vorgesehen ist.

8. Demontierbares Eindrehwerkzeug nach Anspruch 5, **dadurch gekennzeichnet**, dass
a) am Hülsenschaft (**330**) eine Hülsenaufnahme (**337**) zum Einstecken eines umkehrbaren Hülseneinsatzes (**380**) oder zur Aufnahme einer gegen eine Feder (**399**) verschiebbaren Schiebehülse (**390**) angeordnet ist, wobei
b) der Hülseneinsatz (**380**) vom Bolzenteil (**351**) durchdrungen wird und an seiner Spitze (**381**) einen Aussenkonus (**382**), komplementär zum Innenkonus (**14**), aufweist und an der Hülsenbasis (**383**) einen Innenkonus (**384**) hat, welcher komplementär zur konischen Halspartie (**110**) des Abutment (**100**) ist und wobei
c) die Schiebehülse (**390**), die nur bei Benutzung des Eindrehwerkzeugs (**300**) für Implantate (**1**) ausgefahren wird, an ihrer Spitze (**391**) einen Aussenkonus (**392**) besitzt, welcher komplementär zum Innenkonus (**14**) ist und
d) bei Verwendung einer Schiebehülse (**390**) am freien Ende des Hülsenschafts (**330**) der Innenkonus (**332**) für Abutments (**100**) vorgesehen ist.

9. Demontierbares Eindrehwerkzeug nach einem der Ansprüche 1 bis 5, **dadurch gekennzeichnet**, dass der Schieber (**370**)
a) einen die Schnappwirkung begünstigenden Dehnungsschlitz (**378**) aufweist und
b) an der Deckfläche (**373**) Aufsetzkanten (**377**) hat, die als Begrenzung für die Einstecktiefe wirken und somit ein Durchrutschen des von beiden Seiten in die Aufnahme (**340**) einführbaren Schiebers (**370**) verhindern.

10. Demontierbares Eindrehwerkzeug nach einem der Ansprüche 1 bis 3, **dadurch gekennzeichnet**, dass die Schraube (**350**), entgegengesetzt zum Gewindezapfen (**352**), einen Vielkantabschnitt (**357**) zum Ansetzen eines Schlüssels und eventuell noch eine Rändelscheibe (**358**) zum Erfassen der Schraube (**350**) mit den Fingern aufweist.

11. Demontierbares Eindrehwerkzeug nach einem der Ansprüche 1 bis 3, **dadurch gekennzeichnet**, dass zur Gewährleistung der passenden Zusammensetzung von unterschiedlich langen Hülsenteilen (**310**) mit unterschiedlich langen Schrauben (**350**) an beiden Werkzeugteilen eine auf Formschluss basierende Codiersicherung vorgesehen ist.

12. Demontierbares Eindrehwerkzeug nach Anspruch 11, **dadurch gekennzeichnet**, dass die Codiersicherung einerseits aus einer Einsenkung (**321**) und einer Verengung (**336**) im Hülsenteil (**310**) und andererseits aus einem Schlussabsatz (**362**) bzw. dem hinteren Stangensegment (**359**) und einer Ringschulter (**361**) am Bolzenteil (**351**) der Schraube (**350**) besteht.

13. Demontierbares Eindrehwerkzeug nach Anspruch 12, dadurch gekennzeichnet, dass die Einsenkung (**321**) auf der Oberseite des Ratschenkörpers (**320**) und die Verengung (**336**) innerlich des Hülsenschafts (**330**) vorgesehen sind.

14. Demontierbares Eindrehwerkzeug nach Anspruch 1, **dadurch gekennzeichnet,** dass am Hülsenteil (**310**) eine umlaufende Nut (**333**) vorhanden ist, um daran ein Sicherheitsfaden zur Verhinderung der Aspiration des Eindrehwerkzeugs (**300**) anzubringen.
